# EUROPEAN PATENT APPLICATION

(11) **EP 4 580 155 A1**
(43) Date of publication of application: **02.07.2025**
(21) Application number: 22956548.6
(22) Date of filing: 26.08.2022
(51) Int. Cl.: H04L 45/24

(54) **COMMUNICATION SYSTEM, RECEPTION DEVICE, TRANSMISSION DEVICE, PROGRAM, AND COMMUNICATION METHOD**

(71) Applicant: Sony Interactive Entertainment Inc., Tokyo 108-0075 (JP)
(72) Inventor: TANIKAWA, Masakazu, Tokyo 108-0075 (JP)
(74) Representative: Fish & Richardson P.C.
(86) International application number: PCT/JP2022/032264
(87) International publication number: WO 2024/042722

(57) **Abstract**

Provided are a communication system, a reception device, a transmission device, a program, and a communication method capable of high-quality communication.

The communication system includes a transmission device which includes a transmission-side processor, a transmission-side memory, and first and second transmission-side communication IFs and which transmits frame data and a reception device which includes a reception-side processor, a reception-side memory, and first and second reception-side communication IFs. The reception-side processor generates, in a case where the reception-side processor is in a multi-communication state in which the plurality of pieces of frame data are received through use of both the first and second reception-side communication IFs, a control signal for switching to a single-communication state in which the plurality of pieces of the frame data are received through use of one of the first and second reception-side communication IFs that is selected on the basis of communication quality. The reception-side processor generates, in a case of the single-communication state, the control signal for switching to the multi-communication state on the basis of the communication quality of one of the first and second reception-side communication IFs that receives the plurality of pieces of the frame data.

## Description

### [Technical Field]

The present invention relates to a communication system, a reception device, a transmission device, a program, and a communication method.

### [Background Art]

There have been provided services via networks such as a cloud gaming service and a motion image distribution service. These services are implemented by a cloud server transmitting streaming data relating to content, for example, a game and a movie, to a terminal of a user. As quality of the content has increased in recent years, a high-speed and stable communication technology is required.

### [Summary]

### [Technical Problem]

It is required to execute high-quality communication in order for a user to play a game or to view a movie without feeling stress. As an index of the communication quality, for example, throughput, latency, and the like are widely used, interruption of the communication does not occur, and hence, communication short in delay can be executed in a communication environment high in throughput and low in latency. A plurality of communication IFs (interfaces) have hitherto sometimes been used in order to increase the communication quality, but there has also been a risk that the interruption of the communication occurs at the time of switching between the communication IFs.

The present invention has been made in view of the situation described above and has an object of providing a communication system, a reception device, a transmission device, a program, and a communication method which use a plurality of communication IFs and is able to execute high-quality communication.

### [Solution to Problem]

In order to solve the problem described above, a communication system according to one aspect of the present disclosure includes a transmission device that includes a transmission-side processor, a transmission-side memory which stores an instruction executed by the transmission-side processor, a first transmission-side communication IF, and a second transmission-side communication IF and transmits a plurality of pieces of frame data included in streaming data of content, and a reception device that includes a reception-side processor, a reception-side memory which stores an instruction executed by the reception-side processor, a first reception-side communication IF, and a second reception-side communication IF and that receives the plurality of pieces of the frame data from the transmission device, the first transmission-side communication IF communicates with the first reception-side communication IF, the second transmission-side communication IF communicates with the second reception-side communication IF, the reception-side processor generates, in a case where the reception-side processor is in a multi-communication state in which the plurality of pieces of the frame data are received through use of both the first reception-side communication IF and the second reception-side communication IF, a control signal for switching to a single-communication state in which the plurality of pieces of the frame data are received through use of one of the first reception-side communication IF and the second reception-side communication IF that is selected on the basis of communication quality, the reception-side processor generates, in a case of the single-communication state, the control signal for switching to the multi-communication state on the basis of the communication quality of one of the first reception-side communication IF and the second reception-side communication IF that receives the plurality of pieces of the frame data, and the transmission-side processor uses one of or both the first transmission-side communication IF and the second transmission-side communication IF on the basis of the control signal to cause the plurality of pieces of the frame data to be transmitted.

In this aspect, the first transmission-side communication IF and the second transmission-side communication IF each transmit a communication quality investigation signal at a constant time interval, and the reception-side processor generates the control signal on the basis of the communication quality investigation signal received by each of the first reception-side communication IF and the second reception-side communication IF.

In this aspect, the communication quality investigation signal includes sequence information indicating a sequence of the transmission, and in a case of the multi-communication state, the number of times of the reception of the communication quality investigation signal including the sequence information according to a predetermined condition by one of the first reception-side communication IF and the second reception-side communication IF is equal to or larger than a predetermined threshold value, the reception-side processor generates the control signal for switching to the single-communication state in which the one of the first reception-side communication IF and the second reception-side communication IF is used to execute the communication.

In this aspect, in the case of the single-communication state, the number of times of the reception of the communication quality investigation signal by the first reception-side communication IF or the second reception-side communication IF is smaller than the predetermined threshold value, the reception-side processor generates the control signal for switching to the multi-communication state.

In this aspect, the reception-side processor generates the control signal on the basis of a time required to receive each of the plurality of pieces of the frame data by the first reception-side communication IF or the second reception-side communication IF.

In this aspect, in the case of the single-communication state, when the time required to receive each of the plurality of pieces of the frame data is equal to or longer than a time obtained by multiplying a time corresponding to one frame by a predetermined rate, the reception-side processor generates the control signal for switching to the multi-communication state.

In this aspect, in the case of the multi-communication state, when the time required to receive each of the plurality of pieces of the frame data by one of the first reception-side communication IF and the second reception-side communication IF is shorter than a time obtained by multiplying a time corresponding to one frame by a predetermined rate, the reception-side processor generates the control signal for switching to the single-communication state in which the one IF is used to executed the communication.

In this aspect, the reception-side processor forms, in the case of the single-communication state, the streaming data on the basis of the plurality of pieces of frame data received by only one of the first reception-side communication IF and the second reception-side communication IF, and the reception-side processor forms, in the case of the multi-communication state, the streaming data on the basis of the frame data that is received by the first reception-side communication IF and the second reception-side communication IF and is received earlier.

In this aspect, the control signal includes information indicating whether or not the first reception-side communication IF is used to execute the communication and information indicating whether or not the second reception-side communication IF is used to execute the communication.

A reception device according to another aspect of the present disclosure includes a reception-side processor, a reception-side memory that stores an instruction executed by the reception-side processor, a first reception-side communication IF, and a second reception-side communication IF, the reception device receives, from a transmission device that includes a transmission-side processor, a transmission-side memory which stores an instruction executed by the transmission-side processor, a first transmission-side communication IF, and a second transmission-side communication IF and that transmits a plurality of pieces of frame data included in streaming data of content, the plurality of pieces of the frame data, the first reception-side communication IF communicates with the first transmission-side communication IF, the second reception-side communication IF communicates with the second transmission-side communication IF, the reception-side processor generates, in a case where the reception-side processor is in a multi-communication state in which the plurality of pieces of the frame data are received through use of both the first reception-side communication IF and the second reception-side communication IF, a control signal for switching to a single-communication state in which the plurality of pieces of the frame data are received through use of one of the first reception-side communication IF and the second reception-side communication IF that is selected on the basis of communication quality, and the reception-side processor generates, in a case of the single-communication state, the control signal for switching to the multi-communication state on the basis of the communication quality of one of the first reception-side communication IF and the second reception-side communication IF that receives the plurality of pieces of the frame data.

A transmission device according to another aspect of the present disclosure includes a transmission-side processor, a transmission-side memory that stores an instruction executed by the transmission-side processor, a first transmission-side communication IF, and a second transmission-side communication IF, the transmission device transmits, to a reception device that includes a reception-side processor, a reception-side memory which stores an instruction executed by the reception-side processor, a first reception-side communication IF, and a second reception-side communication IF and that receives a plurality of pieces of frame data included in streaming data of content, the plurality of pieces of the frame data, the first transmission-side communication IF communicates with the first reception-side communication IF, the second transmission-side communication IF communicates with the second reception-side communication IF, in a case of a multi-communication state in which both the first transmission-side communication IF and the second transmission-side communication IF are used to transmit the plurality of pieces of the frame data, when a control signal for switching to a single-communication state in which one of the first reception-side communication IF and the second reception-side communication IF that is selected on the basis of communication quality is used to receive the plurality of pieces of the frame data is received, the transmission-side processor uses, on the basis of the control signal, one of the first transmission-side communication IF and the second transmission-side communication IF to cause the plurality of pieces of frame data to be transmitted, and in a case of the single-communication state, when the control signal for switching to the multi-communication state on the basis of the communication quality of one of the first reception-side communication IF and the second reception-side communication IF that receives the plurality of pieces of the frame data is received, the transmission-side processor uses, on the basis of the control signal, both the first transmission-side communication IF and the second transmission-side communication IF to cause the plurality of pieces of frame data to be transmitted.

A program according to another aspect of the present disclosure causes a reception-side processor included in a reception device that includes the reception-side processor, a reception-side memory which stores an instruction executed by the reception-side processor, a first reception-side communication IF, and a second reception-side communication IF and receives, from a transmission device which includes a transmission-side processor, a transmission-side memory that stores an instruction executed by the transmission-side processor, a first transmission-side communication IF that communicates with the first reception-side communication IF, and a second transmission-side communication IF that communicates with the second reception-side communication IF and which transmits a plurality of pieces of frame data included in streaming data of content, the plurality of pieces of the frame data, to execute a procedure of generating, in a case where the reception-side processor is in a multi-communication state in which the plurality of pieces of the frame data are received through use of both the first reception-side communication IF and the second reception-side communication IF, a control signal for switching to a single-communication state in which the plurality of pieces of the frame data are received through use of one of the first reception-side communication IF and the second reception-side communication IF that is selected on the basis of communication quality, and a procedure of generating, in a case of the single-communication state, the control signal for switching to the multi-communication state on the basis of the communication quality of one of the first reception-side communication IF and the second reception-side communication IF that receives the plurality of pieces of the frame data.

A program according to another aspect of the present disclosure causes a transmission-side processor included in a transmission device that includes the transmission-side processor, a transmission-side memory which stores an instruction executed by the transmission-side processor, a first transmission-side communication IF, and a second transmission-side communication IF, and transmits, to a reception device which includes a reception-side processor, a reception-side memory that stores an instruction executed by the reception-side processor, a first reception-side communication IF that communicates with the first transmission-side communication IF, and a second reception-side communication IF that communicates with the second transmission-side communication IF and which receives a plurality of pieces of frame data included in streaming data of content, the plurality of pieces of the frame data, to execute a procedure of using, in a case of a multi-communication state in which both the first transmission-side communication IF and the second transmission-side communication IF are used to transmit the plurality of pieces of the frame data, when a control signal for switching to a single-communication state in which one of the first reception-side communication IF and the second reception-side communication IF that is selected on the basis of communication quality is used to receive the plurality of pieces of the frame data is received, on the basis of the control signal, one of the first transmission-side communication IF and the second transmission-side communication IF to cause the plurality of pieces of frame data to be transmitted, and a procedure of using, in a case of the single-communication state, when the control signal for switching to the multi-communication state on the basis of the communication quality of one of the first reception-side communication IF and the second reception-side communication IF that receives the plurality of pieces of the frame data is received, on the basis of the control signal, both the first transmission-side communication IF and the second transmission-side communication IF to cause the plurality of pieces of frame data to be transmitted.

A communication method according to another aspect of the present disclosure is a communication method executed through use of a communication system which includes a transmission device that includes a transmission-side processor, a transmission-side memory which stores an instruction executed by the transmission-side processor, a first transmission-side communication IF, and a second transmission-side communication IF and that transmits a plurality of pieces of frame data included in streaming data of content, and a reception device that includes a transmission-side processor, a transmission-side memory which stores an instruction executed by the transmission-side processor, a first transmission-side communication IF which communicates with the first reception-side communication IF, and a second transmission-side communication IF which communicates with the second reception-side communication IF and that receives the plurality of pieces of the frame data from the transmission device and the communication method includes a procedure of generating, by the reception-side processor, in a case where the reception-side processor is in a multi-communication state in which the plurality of pieces of the frame data are received through use of both the first reception-side communication IF and the second reception-side communication IF, a control signal for switching to a single-communication state in which the plurality of pieces of the frame data are received through use of one of the first reception-side communication IF and the second reception-side communication IF that is selected on the basis of communication quality, a procedure of generating, by the reception-side processor, in a case of the single-communication state, the control signal for switching to the multi-communication state on the basis of the communication quality of one of the first reception-side communication IF and the second reception-side communication IF that receives the plurality of pieces of the frame data, and a procedure of using, by the transmission-side processor, one of or both the first transmission-side communication IF and the second transmission-side communication IF on the basis of the control signal to cause the plurality of pieces of the frame data to be transmitted.

### [Brief Description of Drawings]

[FIG. 1]

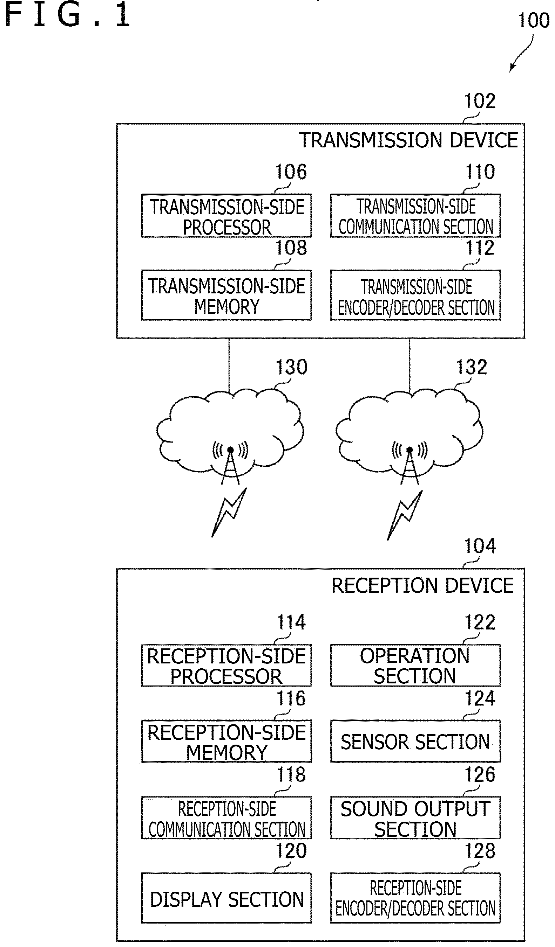

   FIG. 1 is a diagram for illustrating an example of an overall configuration of a communication system according to one embodiment of the present disclosure.
[FIG. 2]

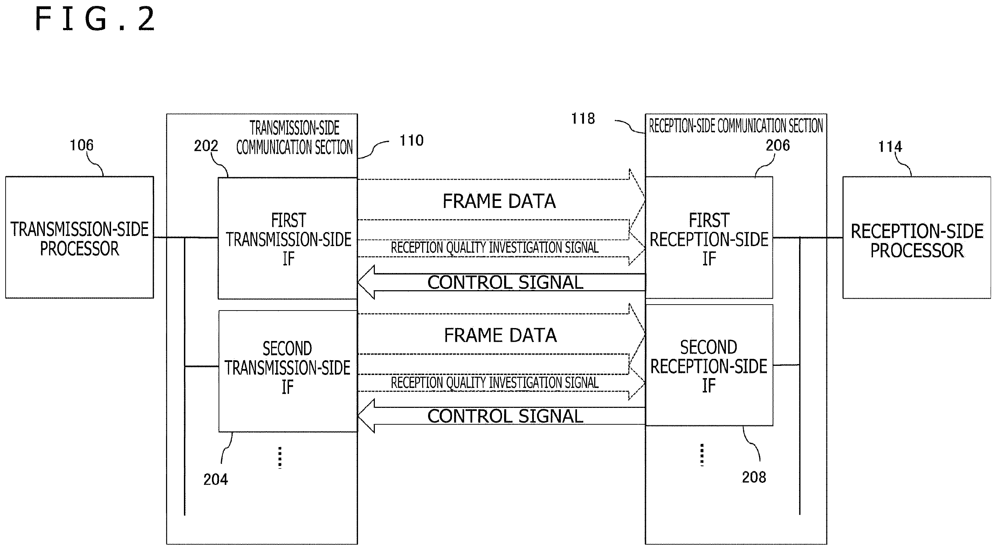

   FIG. 2 is a diagram for describing communication between a transmission-side communication section and a reception-side communication section.
[FIG. 3]

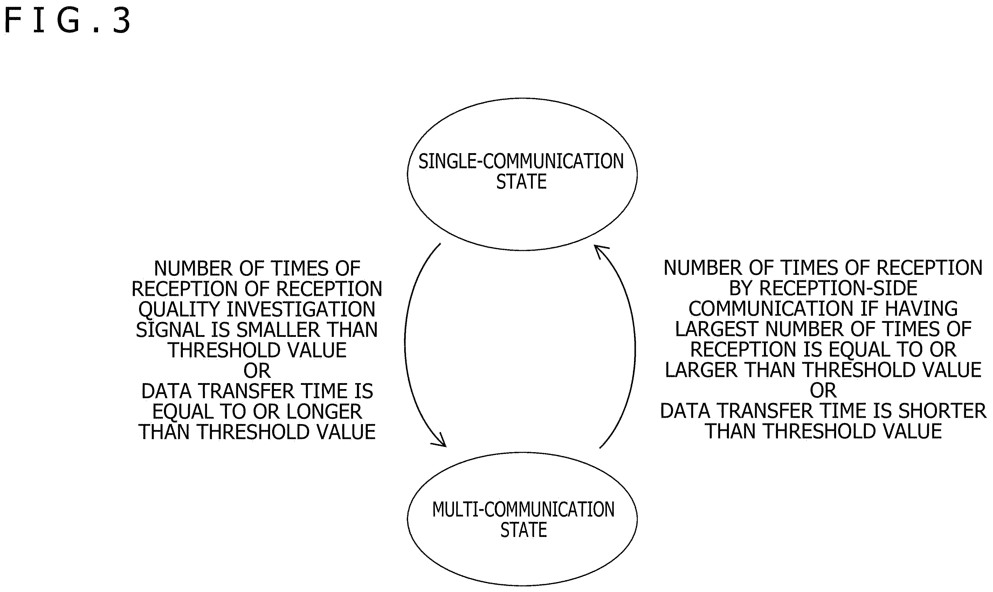

   FIG. 3 is a state transition diagram.
[FIG. 4]

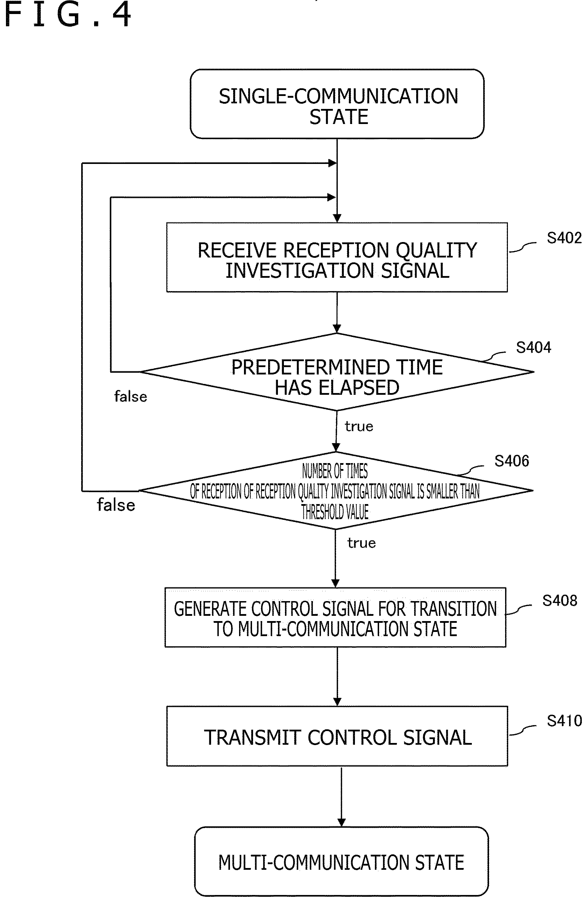

   FIG. 4 is a flowchart for illustrating an operation of a reception device at the time of transition from a single-communication state to a multi-communication state.
[FIG. 5]

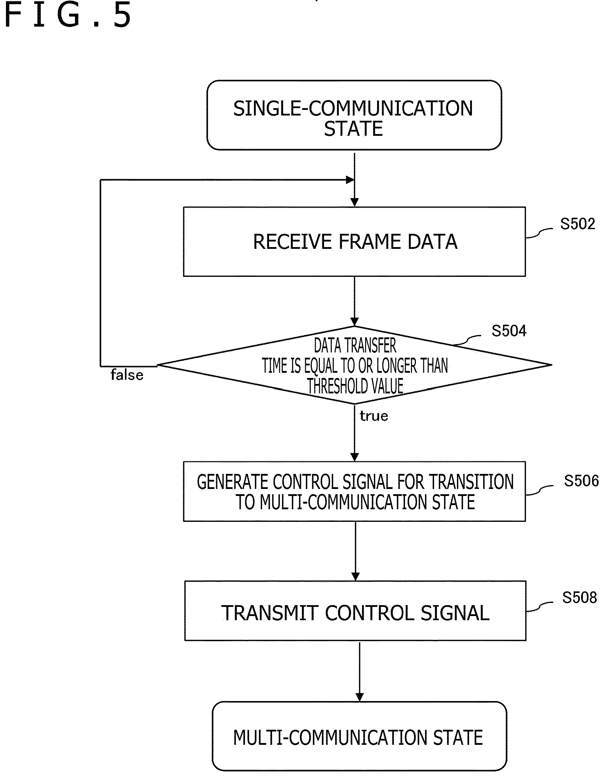

   FIG. 5 is a flowchart for illustrating an operation of the reception device at the time of the transition from the single-communication state to the multi-communication state.
[FIG. 6]

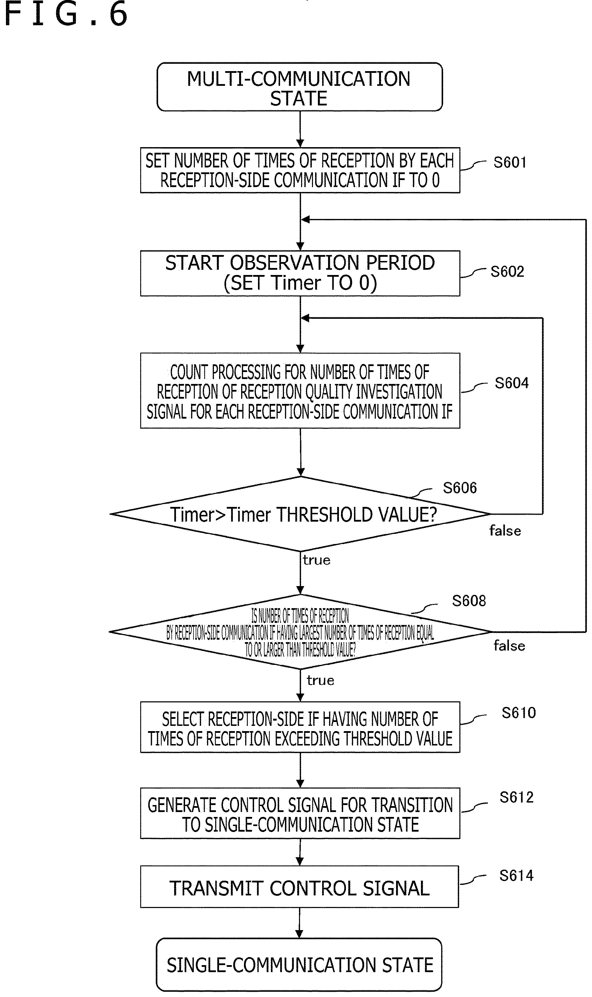

   FIG. 6 is a flowchart for illustrating an operation of the reception device at the time of transition from the multi-communication state to the single-communication state.
[FIG. 7]

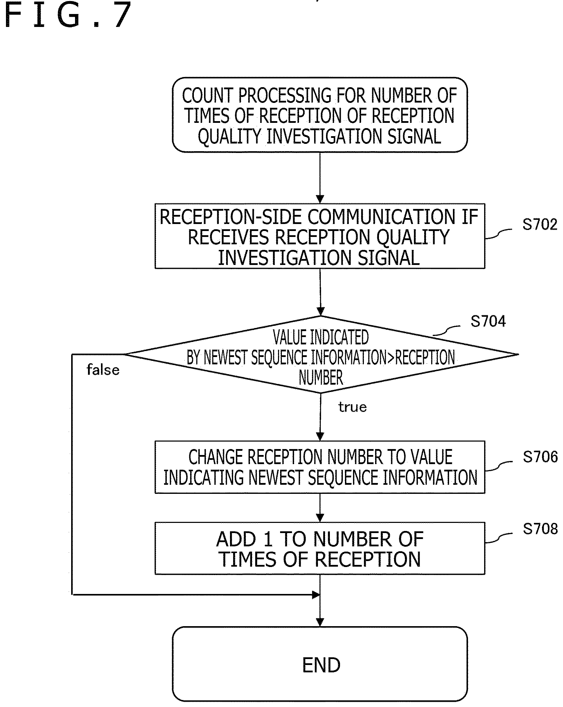

   FIG. 7 is a flowchart for describing count processing for the number of times of reception of a communication quality investigation signal.
[FIG. 8]

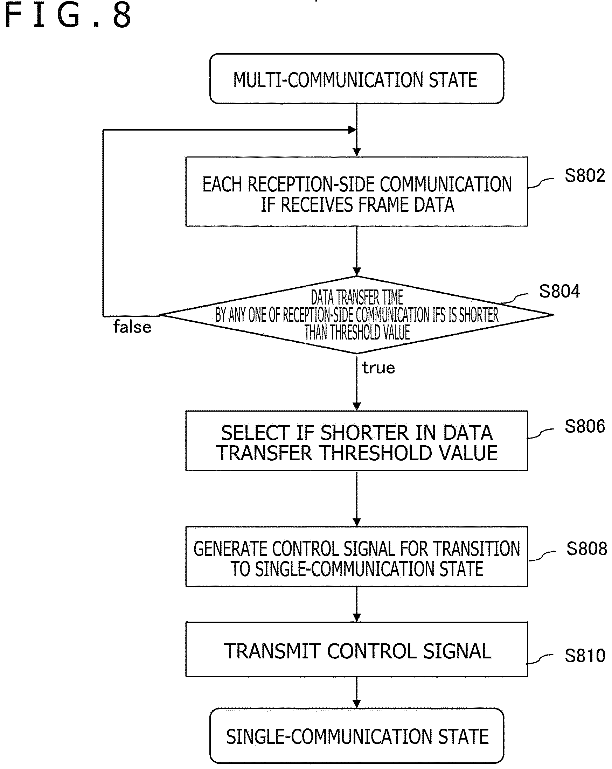

   FIG. 8 is a flowchart for illustrating an operation of the reception device at the time of the transition from the multi-communication state to the single-communication state.
[FIG. 9]

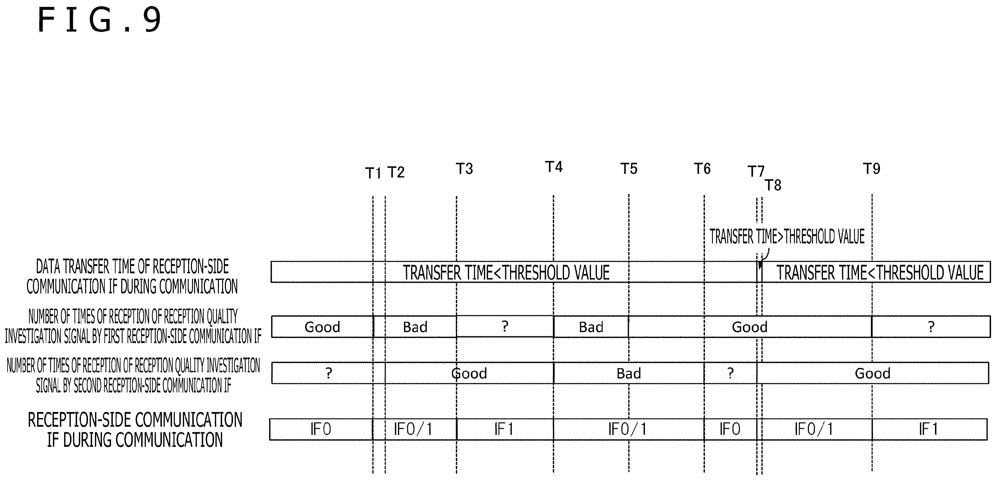

   FIG. 9 is a timing chart for describing switching between the single-communication state and the multi-communication state according to a communication situation.

### [Description of Embodiment]

FIG. 1 is a diagram for illustrating an example of an overall configuration of a communication system 100 according to one embodiment of the present disclosure. As illustrated in FIG. 1, in the communication system 100 according to the present embodiment, there are included a transmission device 102 and a reception device 104 each of which mainly includes a computer.

The communication system 100 includes a transmission device 102 and a reception device 104. The transmission device 102 and the reception device 104 are connected to a computer network 130 including a mobile communication system such as a fourth generation mobile communication system (4G) and a fifth generation mobile communication system (5G), the Internet, and the like. For example, the transmission device 102 is connected to the Internet, and the reception device 104 is connected to the mobile communication system such as the 4G mobile communication system and the 5G mobile communication system. Further, the transmission device 102 and the reception device 104 can communicate with each other via computer networks 130 and 132. Note that, as described later, the communication system uses a plurality of communication IFs to execute the communication, and hence, the plurality of computer networks are described as an example in FIG. 1.

The transmission device 102 according to the present embodiment is, for example, a server computer which executes a program of a game relating to a cloud gaming service. As illustrated in FIG. 1, in the transmission device 102, there are included a transmission-side processor 106, a transmission-side memory 108 which stores instructions executed by this transmission-side processor 106, a transmission-side communication section 110, and a transmission-side encoder/decoder section 112. The transmission device 102 transmits a plurality of pieces of frame data included in streaming data relating to content.

The transmission-side processor 106 is a program control device, for example, a CPU (central processing unit) or the like and executes various types of information processing according to programs stored in the transmission-side memory 108. The transmission-side processor 106 according to the present embodiment also includes a GPU (graphic processing unit) which draws an image in a frame buffer on the basis of a graphic command or data supplied from this CPU.

The transmission-side memory 108 is, for example, a storage element such as a ROM (read-only memory) and a RAM (random access memory), and an SSD (solid state drive). The programs executed by the transmission-side processor 106 and the like are stored in the transmission-side memory 108. Moreover, an area for the frame buffer in which the image is drawn by the GPU included in the transmission-side processor 106 is secured in the transmission-side memory 108 according to the present embodiment.

The transmission-side communication section 110 is a communication IF for transmitting and receiving data to and from a computer such as the reception device 104 via, for example, the computer network 130. The transmission-side communication section 110 includes a plurality of transmission-side communication IFs and includes, for example, a first transmission-side communication IF 202 and a second transmission-side communication IF 204 (see FIG. 2).

The transmission-side encoder/decoder section 112 includes, for example, an encoder and a decoder. This encoder encodes an input image to generate image data indicating this image. Moreover, this decoder decodes input image data to output an image indicated by this image data. The data to be encoded by the encoder and the data to be decoded by the decoder may be sound data.

The reception device 104 according to the present embodiment is, for example, a computer such as a smartphone or a tablet terminal used by a user who uses the cloud gaming service. Note that the reception device 104 may be an electronic device which can communicate with the transmission device 102 via a communication dongle such as a television set including the communication dongle.

In the reception device 104, there are included, for example, a reception-side processor 114, a reception-side memory 116 which stores instructions executed by this reception-side processor 114, a reception-side communication section 118, a display section 120, an operation section 122, a sensor section 124, a sound output section 126, and a reception-side encoder/decoder section 128. The reception device 104 receives a plurality of pieces of the frame data from the transmission device 102.

The reception-side processor 114 is a program control device, for example, a CPU or the like and executes various types of information processing according to programs stored in the reception-side memory 116.

The reception-side memory 116 is, for example, a storage element such as a ROM and a RAM, and an SSD. The programs executed by the reception-side processor 114 and the like are stored in the reception-side memory 116.

The reception-side communication section 118 is a communication IF for transmitting and receiving data to and from a computer such as the transmission device 102 via, for example, the computer network 130. The reception-side communication section 118 includes a plurality of reception-side communication IFs and includes, for example, a first reception-side communication IF 206 and a second reception-side communication IF 208 (see FIG. 2).

The display section 120 is a display device, for example, a liquid crystal display or an organic EL (electroluminescent) display.

The operation section 122 is an operation member used to execute, for example, operation input to the reception-side processor 114.

The sensor section 124 is a sensor such as a motion sensor capable of detecting, for example, an acceleration, an angular velocity, or the like.

The sound output section 126 is a sound output device, for example, a speaker which outputs sound indicated by sound data and the like.

The reception-side encoder/decoder section 128 includes, for example, an encoder and a decoder. This encoder encodes an input image to generate image data indicating this image. Moreover, this decoder decodes input image data to output an image indicated by this image data. The data to be encoded by the encoder and the data to be decoded by the decoder may be sound data.

Note that the reception device 104 may include a touch panel. In this case, this touch panel plays the role of both the display section 120 and the operation section 122 described above.

In the present embodiment, when the user executes, on the operation section 122, an input operation in the play of the game in the cloud gaming service, the reception device 104 generates operation data corresponding to this input operation and transmits this operation data to the transmission device 102. After that, the transmission device 102 executes game processing corresponding to the received operation data. After that, the transmission device 102 generates a play image and sound data indicating a play situation of this game on the basis of a result of this game processing and records the play image and the sound data in the frame buffer of the transmission device 102. In the present embodiment, the game processing and the generation of the play image and the sound data are repeatedly executed.

After that, the transmission device 102 acquires the play image and the sound data recorded in the frame buffer and encodes the play image and the sound data to generate frame data indicating the play image and the sound data. After that, the transmission device 102 transmits the generated frame data to the reception device 104. After that, the reception device 104 decodes the frame data received from the transmission device 102, causes the display section 120 to display a play image generated through this decoding, and causes the sound output section 126 to output the sound data generated through this decoding.

As described above, the transmission device 102 according to the present embodiment executes streaming distribution of the moving image generated in response to the play situation of the game to the reception device 104 used by the user who is playing this game.

FIG. 2 is a diagram for describing communication between the transmission-side communication section 110 and the reception-side communication section 118. Note that there is hereinafter described a case where the transmission-side communication section 110 includes at least the first transmission-side communication IF 202 and the second transmission-side communication IF 204 and the reception-side communication section 118 includes at least the first reception-side communication IF 206 and the second reception-side communication IF 208, but the transmission-side communication section 110 may include three or more transmission-side communication IFs, and the reception-side communication section 118 may include three or more reception-side communication IFs.

Each transmission-side communication IF communicates with a corresponding reception-side communication IF. Specifically, for example, the first transmission-side communication IF 202 communicates with the first reception-side communication IF 206, and the second transmission-side communication IF 204 communicates with the second reception-side communication IF 208.

The communication system 100 uses a different transmission-side communication IF and a different reception-side communication IF according to a state. Specifically, the communication system 100 uses one of the first reception-side communication IF 206 and the second reception-side communication IF 208 to execute the communication in a case of a single-communication state. In the case of the single-communication state, only one of the first reception-side communication IF 206 and the second reception-side communication IF 208 receives the frame data. After that, the reception-side processor 114 forms streaming data on the basis of a plurality of pieces of frame data received by only one of the first reception-side communication IF 206 and the second reception-side communication IF 208.

Moreover, the communication system 100 uses both the first reception-side communication IF 206 and the second reception-side communication IF 208 to receive the plurality of pieces of frame data in a case of a multi-communication state. After that, the reception-side processor 114 forms the streaming data on the basis of the frame data which has been received by the first reception-side communication IF 206 or the second reception-side communication IF 208 and has been received earlier. The single-communication state and the multi-communication state are switched as a state transition diagram illustrated in FIG. 3.

Each transmission-side communication IF transmits the frame data and a communication quality investigation signal to each corresponding reception-side communication IF. Specifically, each transmission-side communication IF transmits, to each corresponding reception-side communication IF, a plurality of pieces of the frame data included in the streaming data of the content. The frame data includes the play image and the sound data of the game as described above. The communication quality investigation signal is a signal for checking a communication situation between the transmission-side communication IF and the reception-side communication IF. For example, each transmission-side communication IF transmits, at a constant time interval, the communication quality investigation signal including sequence information indicating a sequence of the transmission to each corresponding reception-side communication IF. The sequence information is information indicating a sequence represented by, for example, the magnitude of the numerical number or the alphabetical order.

Each reception-side communication IF receives the frame data and the communication quality investigation signal from each corresponding transmission-side communication IF. Specifically, each reception-side communication IF receives, from each corresponding transmission-side communication IF, a plurality of pieces of the frame data included in the streaming data of the content and the communication quality investigation signal.

Moreover, each reception-side communication IF transmits a control signal to each corresponding transmission-side communication IF. Specifically, the control signal includes information indicating whether or not the first reception-side communication IF 206 is used to execute the communication and information indicating whether or not the second reception-side communication IF 208 is used to execute the communication. For example, the control signal is a signal including the number of bits corresponding to the number of combinations each between the transmission-side communication IF and the reception-side communication IF to be used. Moreover, data of each bit is data indicating whether or not the transmission-side communication IF and the reception-side communication IF corresponding to this bit is to be used.

In the case where the two sets of the transmission-side communication IF and the reception-side communication IF are used as described above, the control signal is a signal having data of a first bit indicating whether or not the first transmission-side communication IF 202 and the first reception-side communication IF 206 are used and data of a second bit indicating whether or not the second transmission-side communication IF 204 and the second reception-side communication IF 208 are used. In this case, when the control signal is "0x01," only the first transmission-side communication IF 202 and the first reception-side communication IF 206 are used for the communication. When the control signal is "0x02," only the second transmission-side communication IF 204 and the second reception-side communication IF 208 are used for the communication. When the control signal is "0x03," both the first transmission-side communication IF 202 and the first reception-side communication IF 206 as well as and the second transmission-side communication IF 204 and the second reception-side communication IF 208 are used for the communication.

Note that, when the user executes the input operation on the operation section 122 in the play of the game and the motion image reproduction as described above, the reception-side processor 114 generates the operation data corresponding to this input operation. Each reception-side communication IF may transmit this operation data to each corresponding transmission-side communication IF, which is not described in FIG. 2.

The reception-side processor 114 generates the control signal on the basis of the communication quality investigation signals received by the first reception-side communication IF 206 and the second reception-side communication IF. Specifically, for example, in the case of the single-communication state, the reception-side processor 114 generates the control signal for switching to the multi-communication state when the number of times of the reception of the communication quality investigation signal by the first reception-side communication IF 206 or the second reception-side communication IF is smaller than a predetermined threshold value. Moreover, in the case of the multi-communication state, the number of times of the reception of the communication quality investigation signal including the sequence information according to a predetermined condition by one of the first reception-side communication IF 206 and the second reception-side communication IF is equal to or larger than the predetermined threshold value, the reception-side processor 114 generates the control signal for switching to the single-communication state in which the one of the first reception-side communication IF 206 and the second reception-side communication IF is used to execute the communication.

Moreover, for example, the reception-side processor 114 generates the control signal on the basis of a time required to receive each of the plurality of pieces of frame data by the first reception-side communication IF 206 or the second reception-side communication IF. Specifically, in the case of the single-communication state, when the time required to receive each of the plurality of pieces of the frame data is equal to or longer than a time obtained by multiplying a time corresponding to one frame by a predetermined rate, the reception-side processor 114 generates the control signal for switching to the multi-communication state. Moreover, in the case of the multi-communication state, when the time required to receive each of the plurality of pieces of the frame data is shorter than the time obtained by the time corresponding to the one frame by the predetermined rate, the reception-side processor 114 generates the control signal for switching to the single-communication state.

The transmission-side processor 106 uses one of or both the first transmission-side communication IF 202 and the second transmission-side communication IF 204 on the basis of the control signal to cause the plurality of pieces of the frame data to be transmitted. Specifically, for example, in the case of the multi-communication state, when the transmission-side communication section 110 receives the control signal for switching to the single-communication state, the transmission-side processor 106 uses one of the first reception-side communication IF 206 and the second reception-side communication IF 208 to cause the frame data to be transmitted.

For example, in the case where the first transmission-side communication IF 202 or the second transmission-side communication IF 204 receives the control signal of "0x01," the transmission-side processor 106 causes only the first transmission-side communication IF 202 to transmit the frame data and the communication quality investigation signal. In the case where the first transmission-side communication IF 202 or the second transmission-side communication IF 204 receives the control signal of "0x02," the transmission-side processor 106 causes only the second transmission-side communication IF 204 to transmit the frame data and the communication quality investigation signal.

Moreover, in the case of the single-communication state, when the transmission-side processor 106 receives the control signal for switching to the multi-communication state generated on the basis of the communication quality of one of the first reception-side communication IF 206 and the second reception-side communication IF 208 which executes the communication of the frame data, the transmission-side processor 106 uses both the first reception-side communication IF 206 and the second reception-side communication IF 208 to cause the frame data to be transmitted. Specifically, for example, in the case where the first transmission-side communication IF 202 or the second transmission-side communication IF 204 receives the control signal of "0x03," the transmission-side processor 106 causes both the first transmission-side communication IF 202 and the second transmission-side communication IF 204 to transmit the frame data and the communication quality investigation signal.

With this communication system 100, according to whether the communication state of each combination between the transmission-side communication IF and the transmission-side communication IF is good or bad, the single-communication state and the multi-communication state can be switched therebetween. As an index of the communication quality, magnitude of throughput and latency is sometimes used, and hereinafter a state in which the throughput is high and the latency is low is simply expressed as a good communication state, and a state in which the throughput is low and the latency is high is simply expressed as a bad communication state.

A description is now given of the switching between the single-communication state and the multi-communication state illustrated in FIG. 3 with reference to FIG. 4 to FIG. 8. FIG. 4 is a flowchart for illustrating an operation of the reception device 104 at the time of the transition of the communication system 100 from the single-communication state to the multi-communication state. At a flowchart start time point of FIG. 4, the communication system 100 is in the single-communication state. In this state, it is assumed that the communication is executed only between the first transmission-side communication IF 202 and the first reception-side communication IF 206.

First, the first reception-side communication IF 206 receives the communication quality investigation signal (S402). Specifically, for example, each transmission-side communication IF transmits, at the constant time interval, the communication quality investigation signal including the sequence information indicating the sequence of the transmission to each corresponding reception-side communication IF. In this state, the first transmission-side communication IF 202 is transmitting the communication quality investigation signal at the constant time interval. Thus, the first reception-side communication IF 206 receives the communication quality investigation signal transmitted from the first transmission-side communication IF 202.

After that, the first reception-side communication IF 206 repeatedly executes the step of S402 until a predetermined time elapses (S404). For example, until one second elapses, the first reception-side communication IF 206 repeatedly executes the step of S402.

After that, the reception-side processor 114 determines whether or not the number of times of the reception of the communication quality investigation signal is smaller than the predetermined threshold value (S406). Specifically, for example, the reception-side processor 114 determines whether or not the number of times of the communication quality investigation signal received by the first reception-side communication IF 206 in one second is smaller than the predetermined threshold value. In a case where the number of times of the reception of the communication quality investigation signal in one second is equal to or larger than the predetermined threshold value, the communication state between the first transmission-side communication IF 202 and the first reception-side communication IF 206 is a good state. Thus, the in order to maintain the single-communication state through use of the first transmission-side communication IF 202 and the first reception-side communication IF 206, the processing returns to S402. Meanwhile, in the case where the number of times of the reception of the communication quality investigation signal in one second is smaller than the predetermined threshold value, the processing proceeds to S408.

The reception-side processor 114 generates the control signal for the transition to the multi-communication state (S408). Specifically, in S406, in the case where the number of times of the reception of the communication quality investigation signal is determined to be smaller than the predetermined threshold value, the communication state between the first transmission-side communication IF 202 and the first reception-side communication IF 206 is highly probably bad. Thus, the reception-side processor 114 generates the control signal for the switching to the multi-communication state in which the communication is executed through use of not only the first transmission-side communication IF 202 and the first reception-side communication IF 206, but also the second transmission-side communication IF 204 and the second reception-side communication IF 208. For example, in the example described above, the reception-side processor 114 generates the control signal of "0x03."

After that, the reception-side processor 114 causes the first reception-side communication IF 206 to transmit the control signal of "0x03". When the first transmission-side communication IF 202 receives the control signal for switching to the multi-communication state, the transmission-side processor 106 uses both the first reception-side communication IF 206 and the second reception-side communication IF 208 to cause the frame data to be transmitted. Through the steps described above, the communication system 100 transitions to the multi-communication state.

FIG. 5 is a flowchart for illustrating an operation of the reception device 104 at the time of the transition of the communication system 100 from the single-communication state to the multi-communication state. At a flowchart start time point of FIG. 5, the communication system 100 is in the single-communication state. In this state, it is assumed that the communication is executed only between the first transmission-side communication IF 202 and the first reception-side communication IF 206.

First, the first reception-side communication IF 206 receives the frame data (S502). Specifically, the first transmission-side communication IF 202 transmits the frame data generated by the transmission-side processor 106, and the first reception-side communication IF 206 receives this frame data.

After that, the reception-side processor 114 determines whether or not the time required to receive each of the plurality of pieces of frame data is equal to or longer than the time obtained by multiplying the time corresponding to the one frame by the predetermined rate (S504). Specifically, for example, the reception-side processor 114 determines that the data transfer time is equal to or longer than the threshold value when the time required by the first reception-side communication IF 206 to receive one piece of the frame data is a half or more of the time corresponding to the one frame.

For example, in a case where the refresh rate of the display section of the reception device 104 is 60 Hz, the time corresponding to the one frame is 16.67 ms. Thus, the reception-side processor 114 determines that the data transfer time is equal to or longer than the threshold value when the time required to receive one piece of the frame data is 8.88 ms or longer.

In a case where the data transfer time is determined to be shorter than the threshold value, the communication state between the first transmission-side communication IF 202 and the first reception-side communication IF 206 is a good state. Thus, the processing returns to S502, and the steps of S502 and S504 are repeatedly executed. Meanwhile, in a case where the data transfer time is determined to be equal to or longer than the threshold value, the communication state between the first transmission-side communication IF 202 and the first reception-side communication IF 206 is highly possibly a bad state. Thus, in this case, the processing proceeds to S506.

After that, the reception-side processor 114 generates the control signal for the transition to the multi-communication state (S506). Specifically, in the case where the data transfer time is determined to be equal to or longer than the threshold value in S504, the reception-side processor 114 generates the control signal for the switching to the multi-communication state in which the communication is executed through use of not only the first transmission-side communication IF 202 and the first reception-side communication IF 206, but also the second transmission-side communication IF 204 and the second reception-side communication IF 208. For example, in the example described above, the reception-side processor 114 generates the control signal of "0x03."

After that, the reception-side processor 114 causes the first reception-side communication IF 206 to transmit the generated control signal (S508). Specifically, the reception-side processor 114 causes the first reception-side communication IF 206 to transmit the control signal of "0x03" (S410). When the first transmission-side communication IF 202 receives the control signal for switching to the multi-communication state, the transmission-side processor 106 uses both the first reception-side communication IF 206 and the second reception-side communication IF 208 to cause the frame data to be transmitted. Through the steps described above, the communication system 100 transitions to the multi-communication state.

Note that the flowcharts illustrated in FIG. 4 and FIG. 5 are executed asynchronously and in parallel.

FIG. 6 and FIG. 7 are flowcharts for illustrating an operation of the reception device 104 at the time of the transition of the communication system 100 from the multi-communication state to the single-communication state. At a flowchart start time point of FIG. 6, the communication system 100 is in the multi-communication state. In this state, the communication is executed between the first transmission-side communication IF 202 and the first reception-side communication IF 206 and between the second transmission-side communication IF 204 and the second reception-side communication IF 208. Moreover, as a variable for managing the sequence information included in the newest communication quality investigation signal received by each reception-side communication IF, a reception number is set to each reception-side communication IF. The reception number of each reception-side communication IF is updated each time the flowchart illustrated in FIG. 6 is executed, and it is assumed that a value of 0 is herein set for the convenience of the description.

First, the reception-side processor 114 sets, to the initial value, a counter which measures the number of times of the reception by each reception-side communication IF (S601). Specifically, for example, at the timing of the transition to the multi-communication state, the reception-side processor 114 sets, to 0, the variable which counts the number of times of the reception of the communication quality investigation signal by each of the first reception-side communication IF 206 and the second reception-side communication IF 208. Note that the timing of the transition to the multi-communication state is, for example, a timing of the transmission of the control signal in S410 or S508.

After that, the reception-side processor 114 sets a timer which measures an observation period to an initial value (S602). Specifically, for example, the reception-side processor 114 sets a value of the timer (Timer) which measures the observation period to 0.

After that, the reception-side processor 114 executes count processing for the number of times of the reception of the communication quality investigation signal for each reception-side communication IF (S604). The step in S604 is processing executed each time when any reception-side communication IF receives the communication quality investigation signal. FIG. 7 is a flowchart for describing the count processing for the number of times of the reception of the communication quality investigation signal.

The reception-side communication IF receives the communication quality investigation signal (S702). Specifically, as in the example described before, each transmission-side communication IF transmits, at the constant time interval, the communication quality investigation signal including the sequence information indicating the sequence of the transmission to each corresponding reception-side communication IF. In this state, it is assumed that, for example, each transmission-side communication IF transmits, at the constant time interval, the communication quality investigation signal including information for identifying the corresponding reception-side communication IF and the sequence information indicated by the magnitude of the numerical number.

The information for identifying the transmission-side communication IF is information indicating any one of the first transmission-side communication IF 202 and the second transmission-side communication IF 204. The sequence information is a numerical value incremented by one when the communication quality investigation signal is transmitted once. Each reception-side communication IF receives the communication quality investigation signal transmitted by the corresponding transmission-side communication IF.

Note that there occurs, according to the communication situation, such a case that the communication quality investigation signal transmitted by the first transmission-side communication IF 202 is received by the second reception-side communication IF 208 and such a case that the communication quality investigation signal transmitted by the second transmission-side communication IF 204 is received by the first reception-side communication IF 206. The information for identifying the corresponding reception-side communication IF is included in the communication quality investigation signal, and hence, each reception-side communication IF receives only the communication quality investigation signal including the information identifying this corresponding reception-side communication IF. As a result, the first reception-side communication IF 206 receives the communication quality investigation signal transmitted by the first transmission-side communication IF 202 and the second reception-side communication IF 208 receives the communication quality investigation signal transmitted by the second transmission-side communication IF 204.

After that, the reception-side processor 114 determines whether or not the sequence information included in the communication quality investigation signal received in S702 follows a predetermined condition (S704).

Specifically, the reception-side processor 114 determines whether or not the numerical value (hereinafter referred to as a value indicating the newest sequence information) indicated by the sequence information included in the communication quality investigation signal received in S702 is larger than a value of the reception number managed for each reception-side communication IF.

For example, in a case where the reception number of the first reception-side communication IF 206 is 0, when the first reception-side communication IF 206 receives the communication quality investigation signal including the sequence information indicating 1, the reception-side processor 114 determines that the value indicated by the newest sequence information is larger than the value of the reception number. Moreover, for example, in a case where the reception number of the first reception-side communication IF 206 is 3, there occurs such a case that the first reception-side communication IF 206 cannot receive the communication quality investigation signal including the sequence information indicating 4 and receives the communication quality investigation signal including the sequence information indicating 5. Also in this case, the reception-side processor 114 determines that the value indicated by the newest sequence information is larger than the value of the reception number. In the case where the value indicated by the newest sequence information is determined to be larger than the reception number, the processing proceeds to S706.

Note that there possibly occur, according to a communication situation, such a case that a part of the communication quality investigation signals transmitted at the constant time interval are not received and such a case that the communication quality investigation signal transmitted later is received earlier than the communication quality investigation signal transmitted earlier. In these cases, the value indicated by the newest sequence information is smaller than the value of the reception number managed for each reception-side communication IF, and hence, the reception-side processor 114 determines that the value indicated by the newest sequence information is smaller than the value of the reception number. In the case where the value indicated by the newest sequence information is determined to be smaller than the value of the reception number, the processing illustrated in FIG. 7 is finished.

In the case where the value indicated by the newest sequence information is determined to be larger than the value of the reception number in S704, the reception-side processor 114 changes the reception number to the number indicated by the newest sequence information (S706). Specifically, for example, in a case where the reception number of the first reception-side communication IF 206 is 0, when the first reception-side communication IF 206 receives the communication quality investigation signal including the sequence information indicating 1, the reception-side processor 114 changes the value of the reception number of the first reception-side communication IF 206 to 1. Moreover, for example, in a case where the reception number of the first reception-side communication IF 206 is 3, when the first reception-side communication IF 206 receives the communication quality investigation signal including the sequence information indicating 5, the reception-side processor 114 changes the value of the reception number of the first reception-side communication IF 206 to 5.

After that, the reception-side processor 114 adds 1 to the number of times of the reception (S708). Specifically, in the case where the number of times of the reception by the first reception-side communication IF 206 is 0, the reception-side processor sets the number of times of the reception by the first reception-side communication IF 206 to 1. When the step of S708 is finished, the processing proceeds to S606.

Note that the processing illustrated in FIG. 7 is executed in parallel for each reception-side communication IF. That is, the processing illustrated in FIG. 7 is executed each time when the first reception-side communication IF 206 receives the communication quality investigation signal including the information for identifying the first reception-side communication IF 206. That is, the processing illustrated in FIG. 7 is executed each time when the second reception-side communication IF 208 receives the communication quality investigation signal including the information for identifying the second reception-side communication IF 208.

After that, with reference back to FIG. 6, the reception-side processor 114 determines whether or not the value of the timer is larger than a threshold value for the timer (S606). Specifically, for example, in the case where the threshold value for the timer is five seconds, the reception-side processor 114 determines that the value of the timer is smaller than the threshold value for the timer until five second have elapsed since S602. Meanwhile, the reception-side processor 114 determines that the value of the timer (Timer) is larger than the threshold value for the timer after five seconds have elapsed since S602. Thus, the steps of S604 and S606 are repeatedly executed until the value of the timer becomes larger than the threshold value for the timer.

In the case where the value of the timer is determined to be larger than the threshold value for the timer in S606, the reception-side processor 114 determines whether or not the number of times of the reception by the reception-side communication IF having the largest number of times of the reception is equal to larger than a threshold value (S608). Specifically, it is assumed that, for example, as a result of the addition to the number of times of the reception in S708, the number of times of the reception by the second reception-side communication IF 208 having the largest number of times of the reception becomes 20. In a case where a value of 15 is set as the predetermined threshold value, the reception-side processor 114 determines that the number of times of the reception by the second reception-side communication IF 208 is equal to or larger than the threshold value.

In S608, in a case where it is determined that the number of times of the reception by the reception-side communication IF having the largest number of times of the reception is smaller than the threshold value, the processing returns to S602, and the processing from S602 to S608 is repeatedly executed.

In a case where the number of times of the reception by the reception-side communication IF having the largest number of times of the reception is determined to be equal to or larger than the threshold value in S608, the reception-side processor 114 selects the reception-side communication IF exceeding the threshold value for the number of times of the reception (S610). Specifically, for example, in a case where the number of times of the reception by the second reception-side communication IF 208 having the largest number of times of the reception exceeds the threshold value as described above, the reception-side processor 114 selects the second reception-side communication IF 208.

After that, the reception-side processor 114 generates the control signal for the transition to the single-communication state (S612). In the example described above, the reception-side processor 114 generates the control signal of "0x02" indicating the transition to the single-communication state through use of the second reception-side communication IF 208.

After that, the reception-side processor 114 causes the first reception-side communication IF 206 and the second reception-side communication IF 208 to transmit the generated control signal (S614). Specifically, the reception-side processor 114 causes the first reception-side communication IF 206 and the second reception-side communication IF 208 to transmit the control signal of "0x02." When the first transmission-side communication IF 202 or the second transmission-side communication IF 204 receives the control signal of "0x02," the transmission-side processor 106 subsequently uses the second reception-side communication IF 208 to cause the frame data to be transmitted. Through the steps described above, the communication system 100 transitions to the single-communication state.

FIG. 8 is a flowchart for illustrating an operation of the reception device 104 at the time of the transition of the communication system 100 from the multi-communication state to the single-communication state. At a flowchart start time point of FIG. 8, the communication system 100 is in the multi-communication state. In this state, the communication is executed between the first transmission-side communication IF 202 and the first reception-side communication IF 206 and between the second transmission-side communication IF 204 and the second reception-side communication IF 208.

First, the first reception-side communication IF 206 or the second reception-side communication IF 208 receives the frame data (S802). Specifically, for example, the first transmission-side communication IF 202 transmits the frame data generated by the transmission-side processor 106 and the first reception-side communication IF 206 receives this frame data. Similarly, the second transmission-side communication IF 204 transmits the frame data, and the second reception-side communication IF 208 receives this frame data.

After that, the reception-side processor 114 determines whether or not the time required by each reception-side communication IF to receive the frame data is shorter than the time obtained by multiplying the time corresponding to the one frame by the predetermined rate (S804). Specifically, the reception-side processor 114 determines that the data transfer time is shorter than the threshold value when the time required by each reception-side communication IF to receive one piece of the frame data is shorter than the half of the time corresponding to the one frame.

For example, in a case where the time required by the first reception-side communication IF 206 to receive certain frame data is 10 ms and the time required by the second reception-side communication IF 208 to receive this frame data is 7 ms, the time required by the second reception-side communication IF 208 to receive is shorter than the half of the time corresponding to the one frame (16.67 ms). In this case, the reception-side processor 114 determines that the data transfer time from the second transmission-side communication IF 204 to the second reception-side communication IF 208 is shorter than the threshold.

In a case where the time required by each of all of the reception-side communication IFs to receive the frame data is determined to be equal to longer than the time obtained by multiplying the time corresponding to the one frame by the predetermined rate in S804, the processing returns to S802, and the processing in S802 and the processing in S804 are repeatedly executed.

In a case where the time required by any one of the reception-side communication IFs to receive the frame data is determined to be shorter than the time obtained by multiplying the time corresponding to the one frame by the predetermined rate in S804, the reception-side processor 114 selects this reception-side communication IF having the time required to receive the frame data shorter than the time obtained by multiplying the time corresponding to the one frame by the predetermined rate (S806). Specifically, for example, in a case where the time required by the second reception-side communication IF 208 to receive the frame data is 7 ms as described above, the reception-side processor 114 selects the second reception-side communication IF 208.

After that, the reception-side processor 114 generates the control signal for the transition to the single-communication state (S808). In the example described above, the reception-side processor 114 generates the control signal of "0x02" indicating the transition to the single-communication state through use of the second reception-side communication IF 208.

After that, the reception-side processor 114 causes the first reception-side communication IF 206 and the second reception-side communication IF 208 to transmit the generated control signal (S810). Specifically, the reception-side processor 114 causes the first reception-side communication IF 206 and the second reception-side communication IF 208 to transmit the control signal of "0x02." When the first transmission-side communication IF 202 or the second transmission-side communication IF 204 receives the control signal of "0x02," the transmission-side processor 106 uses the second reception-side communication IF 208 to cause the frame data to be transmitted. Through the steps described above, the communication system 100 transitions to the single-communication state.

Note that the flowcharts illustrated in FIG. 6 and FIG. 8 are executed asynchronously and in parallel. As described above, with this communication system 100, according to whether the communication state of each combination of transmission-side communication IFs is good or bad, the single-communication state and the multi-communication state is switched therebetween.

FIG. 9 is a timing chart for describing the switching between the single-communication state and the multi-communication state according to the communication situation. A first row from the top of the timing chart indicates a magnitude relation between the data transfer time (time required by the reception-side communication IF during the communication to receive the frame data) and the threshold value (time obtained by multiplying the time corresponding to the one frame by the predetermined rate). In the case where the time required by the reception-side communication IF during the communication to receive the frame data is shorter than the time obtained by multiplying the time corresponding to the one frame by the predetermined rate, this case is denoted as "transfer time < threshold value." In the case where the time required by the reception-side communication IF during the communication to receive the frame data is equal to or longer than the time obtained by multiplying the time corresponding to the one frame by the predetermined rate, this case is denoted as "transfer time > threshold value."

A second row from the top of the timing chart indicates the number of times of the reception of, by the first reception-side communication IF 206, the communication quality investigation signal which satisfies the predetermined condition. A third row from the top of the timing chart indicates the number of times of the reception of the communication quality investigation signal which satisfies the predetermined condition by the second reception-side communication IF 208. In a case where the number of times of the reception is equal to or larger than the threshold value, this case is denoted as "Good" and, in a case where the number of times of the reception is smaller than the threshold value, this case is denoted as "Bad."

A fourth row from the top of the timing chart indicates the reception-side communication IFs during the communication. In the case where the communication is being executed through use of only the first reception-side communication IF 206, this case is denoted as "IF0," in the case where the communication is being executed through use of only the second reception-side communication IF 208, this case is denoted as "IF1," and, in the case where the communication is being executed through use of the first reception-side communication IF 206 and the second reception-side communication IF 208, this case is denoted as "IF0/1."

First, the communication system 100 is using only the first transmission-side communication IF 202 and the first reception-side communication IF 206 to execute the communication in a period until a timing T1. The number of times of the reception by the first reception-side communication IF 206 during the communication is smaller than the threshold value at the timing T1. Thus, according to the flowchart illustrated in FIG. 4, the communication system 100 transitions to the multi-communication state. The communication system 100 uses the first reception-side communication IF 206 and the second reception-side communication IF 208 to execute the communication after the timing T1.

The number of times of the reception by the second reception-side communication IF 208 is equal to or larger than the threshold value at a timing T2. Thus, the flowchart illustrated in FIG. 6 is executed from the timing T2 to a timing T3, and the communication system 100 transitions to the single-communication state at the timing T3. The communication system 100 uses only the second transmission-side communication IF 204 and the second reception-side communication IF 208 to execute the communication after the timing T3.

The number of times of the reception by the second reception-side communication IF 208 during the communication is smaller than the threshold value at a timing T4. Thus, according to the flowchart illustrated in FIG. 4, the communication system 100 transitions to the multi-communication state. The communication system 100 uses the first transmission-side communication IF 202 and the first reception-side communication IF 206 as well as and the second transmission-side communication IF 204 and the second reception-side communication IF 208 to execute the communication after the timing T4.

The number of times of the reception by the first reception-side communication IF 206 is equal to or larger than the threshold value at a timing T5. Thus, the flowchart illustrated in FIG. 6 is executed from the timing T5 to a timing T6, and the communication system 100 transitions to the single-communication state. The communication system 100 uses only the first transmission-side communication IF 202 and the first reception-side communication IF 206 to execute the communication after the timing T6.

The data transfer time of the first reception-side communication IF 206 is equal to or longer than the threshold value at a timing T7. Thus, according to the flowchart illustrated in FIG. 5, the communication system 100 transitions to the multi-communication state. The communication system 100 uses the first transmission-side communication IF 202 and the first reception-side communication IF 206 as well as the second transmission-side communication IF 204 and the second reception-side communication IF 208 to execute the communication after the timing T7.

The number of times of the reception by the second reception-side communication IF 208 is equal to or larger than the threshold value at a timing T8. Thus, the flowchart illustrated in FIG. 6 is executed from the timing T8 to a timing T9, and the communication system 100 transitions to the single-communication state.

The communication system 100 uses only the second transmission-side communication IF 204 and the second reception-side communication IF 208 to execute the communication after the timing T9.

As described above, with this communication system 100, the deterioration of the communication state between the transmission-side communication IF and the reception-side communication IF used in the single-communication state is detected, and the state transitions to the multi-communication state. In the multi-communication state, it is detected whether or not the communication state of each reception-side communication IF is improved, and the multi-communication state transitions to the single-communication state through use of the transmission-side communication IF and the reception-side communication IF in the good communication state. That is, according to the reception situation of each reception-side communication IF, the communication through use of the reception-side communication IF in the good communication state is executed. As a result, communication having less communication interruption and a short delay can be executed.

Note that the present invention is not limited to the embodiment described above. Moreover, the specific strings and numerical values described above and the specific strings and numerical values in the drawings are examples, and the present invention is not limited to these strings and numerical values.

For example, in the description given above, there is described the case of the streaming distribution of the moving image generated in response to the play situation of the game to the reception device 104 used by the user who is playing this game, but this communication system 100 may be used for communication services for movies and music.

Moreover, there is described the case where each of the number of transmission-side communication IFs and the number of reception-side communication IFs is two, but each of the number of transmission-side communication IFs and the number of reception-side communication IFs may be three or more.

Moreover, as the flowcharts of the transition from the single-communication state to the multi-communication state, FIG. 4 and FIG. 5 are exemplified, but only one thereof may be used. Similarly, as the flowcharts of the transition from the multi-communication state to the single-communication state, FIG. 6 and FIG. 8 are exemplified, but only one thereof may be used.

Further, although the number of times of the reception in S406 of FIG. 4 is the number of times of all of the received reception quality investigation signals, as illustrated in FIG. 7, the number of times of the reception may be the number of times of the reception of the reception quality investigation signal satisfying the predetermined condition.

## Claims

1. A communication system comprising:
a transmission device that includes a transmission-side processor, a transmission-side memory which stores an instruction executed by the transmission-side processor, a first transmission-side communication interface, and a second transmission-side communication interface and transmits a plurality of pieces of frame data included in streaming data of content; and
a reception device that includes a reception-side processor, a reception-side memory which stores an instruction executed by the reception-side processor, a first reception-side communication interface, and a second reception-side communication interface and that receives the plurality of pieces of the frame data from the transmission device, wherein
the first transmission-side communication interface communicates with the first reception-side communication interface,
the second transmission-side communication interface communicates with the second reception-side communication interface,
the reception-side processor generates, in a case where the reception-side processor is in a multi-communication state in which the plurality of pieces of the frame data are received through use of both the first reception-side communication interface and the second reception-side communication interface, a control signal for switching to a single-communication state in which the plurality of pieces of the frame data are received through use of one of the first reception-side communication interface and the second reception-side communication interface that is selected on a basis of communication quality,
the reception-side processor generates, in a case of the single-communication state, the control signal for switching to the multi-communication state on the basis of the communication quality of one of the first reception-side communication interface and the second reception-side communication interface that receives the plurality of pieces of the frame data, and
the transmission-side processor uses one of or both the first transmission-side communication interface and the second transmission-side communication interface on a basis of the control signal to cause the plurality of pieces of the frame data to be transmitted.

2. The communication system according to claim 1, wherein the first transmission-side communication interface and the second transmission-side communication interface each transmit a communication quality investigation signal at a constant time interval, and
the reception-side processor generates the control signal on a basis of the communication quality investigation signal received by each of the first reception-side communication interface and the second reception-side communication interface.

3. The communication system according to claim 2, wherein the communication quality investigation signal includes sequence information indicating a sequence of the transmission, and,
in a case of the multi-communication state, when the number of times of the reception of the communication quality investigation signal including the sequence information according to a predetermined condition by one of the first reception-side communication interface and the second reception-side communication interface is equal to or larger than a predetermined threshold value, the reception-side processor generates the control signal for switching to the single-communication state in which the one of the first reception-side communication interface and the second reception-side communication interface is used to execute the communication.

4. The communication system according to claim 3, wherein, in the case of the single-communication state, the number of times of the reception of the communication quality investigation signal by the first reception-side communication interface or the second reception-side communication interface is smaller than the predetermined threshold value, the reception-side processor generates the control signal for switching to the multi-communication state.

5. The communication system according to any one of claims 1 to 4, wherein
the reception-side processor generates the control signal on a basis of a time required to receive each of the plurality of pieces of the frame data by the first reception-side communication interface or the second reception-side communication interface.

6. The communication system according to claim 5, wherein, in the case of the single-communication state, when the time required to receive each of the plurality of pieces of the frame data is equal to or longer than a time obtained by multiplying a time corresponding to one frame by a predetermined rate, the reception-side processor generates the control signal for switching to the multi-communication state.

7. The communication system according to claim 5 or 6, wherein,
in the case of the multi-communication state, when the time required to receive each of the plurality of pieces of the frame data by one of the first reception-side communication interface and the second reception-side communication interface is shorter than a time obtained by multiplying a time corresponding to one frame by a predetermined rate, the reception-side processor generates the control signal for switching to the single-communication state in which the one interface is used to executed the communication.

8. The communication system according to any one of claims 1 to 3, wherein
the reception-side processor forms, in the case of the single-communication state, the streaming data on a basis of the plurality of pieces of frame data received by only one of the first reception-side communication interface and the second reception-side communication interface, and
the reception-side processor forms, in the case of the multi-communication state, the streaming data on a basis of the frame data that is received by the first reception-side communication interface and the second reception-side communication interface and is received earlier.

9. The communication system according to any one of claims 1 to 3, wherein
the control signal includes information indicating whether or not the first reception-side communication interface is used to execute the communication and
information indicating whether or not the second reception-side communication interface is used to execute the communication.

10. A reception device comprising:
a reception-side processor;
a reception-side memory that stores an instruction executed by the reception-side processor;
a first reception-side communication interface; and
a second reception-side communication interface, wherein the reception device receives, from a transmission device that includes a transmission-side processor, a transmission-side memory which stores an instruction executed by the transmission-side processor, a first transmission-side communication interface, and a second transmission-side communication interface and that transmits a plurality of pieces of frame data included in streaming data of content, the plurality of pieces of the frame data,
the first reception-side communication interface communicates with the first transmission-side communication interface,
the second reception-side communication interface communicates with the second transmission-side communication interface,
the reception-side processor generates, in a case where the reception-side processor is in a multi-communication state in which the plurality of pieces of the frame data are received through use of both the first reception-side communication interface and the second reception-side communication interface, a control signal for switching to a single-communication state in which the plurality of pieces of the frame data are received through use of one of the first reception-side communication interface and the second reception-side communication interface that is selected on a basis of communication quality, and
the reception-side processor generates, in a case of the single-communication state, the control signal for switching to the multi-communication state on the basis of the communication quality of one of the first reception-side communication interface and the second reception-side communication interface that receives the plurality of pieces of the frame data.

11. A transmission device comprising:
a transmission-side processor;
a transmission-side memory that stores an instruction executed by the transmission-side processor;
a first transmission-side communication interface; and
a second transmission-side communication interface,
wherein
the transmission device transmits, to a reception device that includes a reception-side processor, a reception-side memory which stores an instruction executed by the reception-side processor, a first reception-side communication interface, and a second reception-side communication interface and that receives a plurality of pieces of frame data included in streaming data of content, the plurality of pieces of the frame data,
the first transmission-side communication interface communicates with the first reception-side communication interface,
the second transmission-side communication interface communicates with the second reception-side communication interface,
in a case of a multi-communication state in which both the first transmission-side communication interface and the second transmission-side communication interface are used to transmit the plurality of pieces of the frame data, when a control signal for switching to a single-communication state in which one of the first reception-side communication interface and the second reception-side communication interface that is selected on a basis of communication quality is used to receive the plurality of pieces of the frame data is received, the transmission-side processor uses, on a basis of the control signal, one of the first transmission-side communication interface and the second transmission-side communication interface to cause the plurality of pieces of frame data to be transmitted, and,
in a case of the single-communication state, when the control signal for switching to the multi-communication state on the basis of the communication quality of one of the first reception-side communication interface and the second reception-side communication interface that receives the plurality of pieces of the frame data is received, the transmission-side processor uses, on the basis of the control signal, both the first transmission-side communication interface and the second transmission-side communication interface to cause the plurality of pieces of frame data to be transmitted.

12. A program that causes a reception-side processor included in a reception device that
includes the reception-side processor, a reception-side memory which stores an instruction executed by the reception-side processor, a first reception-side communication interface, and a second reception-side communication interface, and
receives, from a transmission device which includes a transmission-side processor, a transmission-side memory that stores an instruction executed by the transmission-side processor, a first transmission-side communication interface that communicates with the first reception-side communication interface, and a second transmission-side communication interface that communicates with the second reception-side communication interface and which transmits a plurality of pieces of frame data included in streaming data of content, the plurality of pieces of the frame data, to execute:
a procedure of generating, in a case where the reception-side processor is in a multi-communication state in which the plurality of pieces of the frame data are received through use of both the first reception-side communication interface and the second reception-side communication interface, a control signal for switching to a single-communication state in which the plurality of pieces of the frame data are received through use of one of the first reception-side communication interface and the second reception-side communication interface that is selected on a basis of communication quality; and
a procedure of generating, in a case of the single-communication state, the control signal for switching to the multi-communication state on the basis of the communication quality of one of the first reception-side communication interface and the second reception-side communication interface that receives the plurality of pieces of the frame data.

13. A program that causes a transmission-side processor included in a transmission device that
includes the transmission-side processor, a transmission-side memory which stores an instruction executed by the transmission-side processor, a first transmission-side communication interface, and a second transmission-side communication interface, and
transmits, to a reception device which includes a reception-side processor, a reception-side memory that stores an instruction executed by the reception-side processor, a first reception-side communication interface that communicates with the first transmission-side communication interface, and a second reception-side communication interface that communicates with the second transmission-side communication interface and which receives a plurality of pieces of frame data included in streaming data of content, the plurality of pieces of the frame data, to execute:
a procedure of using, in a case of a multi-communication state in which both the first transmission-side communication interface and the second transmission-side communication interface are used to transmit the plurality of pieces of the frame data, when a control signal for switching to a single-communication state in which one of the first reception-side communication interface and the second reception-side communication interface that is selected on a basis of communication quality is used to receive the plurality of pieces of the frame data is received, on a basis of the control signal, one of the first transmission-side communication interface and the second transmission-side communication interface to cause the plurality of pieces of frame data to be transmitted; and
a procedure of using, in a case of the single-communication state, when the control signal for switching to the multi-communication state on the basis of the communication quality of one of the first reception-side communication interface and the second reception-side communication interface that receives the plurality of pieces of the frame data is received, on the basis of the control signal, both the first transmission-side communication interface and the second transmission-side communication interface to cause the plurality of pieces of frame data to be transmitted.

14. A communication method executed through use of a communication system including
a transmission device that includes a transmission-side processor, a transmission-side memory which stores an instruction executed by the transmission-side processor, a first transmission-side communication interface, and a second transmission-side communication interface and that transmits a plurality of pieces of frame data included in streaming data of content, and
a reception device that includes a transmission-side processor, a transmission-side memory which stores an instruction executed by the transmission-side processor, a first transmission-side communication interface which communicates with the first reception-side communication interface, and a second transmission-side communication interface which communicates with the second reception-side communication interface and that receives the plurality of pieces of the frame data from the transmission device, the communication method comprising:
a procedure of generating, by the reception-side processor, in a case where the reception-side processor is in a multi-communication state in which the plurality of pieces of the frame data are received through use of both the first reception-side communication interface and the second reception-side communication interface, a control signal for switching to a single-communication state in which the plurality of pieces of the frame data are received through use of one of the first reception-side communication interface and the second reception-side communication interface that is selected on a basis of communication quality;
a procedure of generating, by the reception-side processor, in a case of the single-communication state, the control signal for switching to the multi-communication state on the basis of the communication quality of one of the first reception-side communication interface and the second reception-side communication interface that receives the plurality of pieces of the frame data; and
a procedure of using, by the transmission-side processor, one of or both the first transmission-side communication interface and the second transmission-side communication interface on a basis of the control signal to cause the plurality of pieces of the frame data to be transmitted.
